# EUROPÄISCHE PATENTSCHRIFT

(11) **EP 0 854 806 B1**
(45) Veröffentlichungstag und Bekanntmachung des Hinweises auf die Patenterteilung: **01.03.2000**
(21) Anmeldenummer: 96934582.6
(22) Anmeldetag: 09.10.1996
(51) Int. Cl.: B60T 8/32, B60T 8/24, B60T 7/12, B60T 13/72

(54) **VERFAHREN ZUM BETRIEB EINER HYDRAULISCHEN BREMSANLAGE**
METHOD OF OPERATING A HYDRAULIC BRAKE SYSTEM
PROCEDE PERMETTANT DE FAIRE FONCTIONNER UN SYSTEME DE FREINAGE HYDRAULIQUE

(30) Priorität: 27.10.1995 DE 19539973
(43) Veröffentlichungstag der Anmeldung: 29.07.1998
(73) Patentinhaber: Continental Teves AG & Co. oHG, 60488 Frankfurt (DE)
(72) Erfinder: ECKERT, Alfred, D-55294 Bodenheim (DE)
(86) Internationale Anmeldenummer: EP9604368
(87) Internationale Veröffentlichungsnummer: WO9716334

(56) Entgegenhaltungen:
- EP-A- 0 379 329
- WO-A-93/24353
- DE-A- 4 324 205
- DE-C- 4 028 290
- DE-C- 4 208 496
- DE-C- 4 329 140
- ATZ AUTOMOBILTECHNISCHE ZEITSCHRIFT, Bd. 97, Nr. 1, Januar 1995, STUTTGART DE, Seiten 36-37, XP000486418 JOSEF PICKENHAHM: "Elektronisch geregelter Bremskraftverstärker" in der Anmeldung erwähnt
- PATENT ABSTRACTS OF JAPAN vol. 12, no. 292 (M-729), 10.August 1988 & JP 63 068451 A (FUJI HEAVY IND.), 28.März 1988,

## Beschreibung

Die Erfindung betrifft ein Verfahren zum Betrieb einer hydraulischen Bremsanlage für Kraftfahrzeuge, die mit einem Antiblockiersystem (ABS), einem unabhängig vom Fahrerwillen elektrisch ansteuerbaren Bremskraftverstärker und einem der Ansteuerung des Bremskraftverstärkers dienenden Druck- bzw. Verzögerungsregler ausgestattet ist, dem als Eingangsgrößen ein von einem übergeordneten Regler erzeugtes Druck- bzw. Verzögerungs-Sollwertsignal, ein den im System herrschenden hydraulischen Druck bzw. die auftretende Verzögerung repräsentierendes Istwertsignal sowie ein den Antiblockier-Regelmodus anzeigendes Signal zugeführt werden.

Ein derartiges Verfahren ist aus der DE 43 24 205 A1 bekannt. Das der Ansteuerung des Bremskraftverstärkers dienende Ausgangssignal des Verzögerungsreglers repräsentiert dem gewünschten Betätigungsweg des Steuerventils des Bremskraftverstärkers, wobei der Verzögerungsregler ein zweites Signal erzeugt, mit dem der Antriebsmotor des Fahrzeuges beeinflußbar ist.

Aus dem in der Automobiltechnischen Zeitschrift ATZ 97 Nr. 1 vom Januar 1995 (Stuttgart, DE) veröffentlichten Fachartikel "Elektronisch geregelter Bremskraftverstärker" ist eine hydraulische Bremsanlage für Kraftfahrzeuge bekannt, bei der zwischen dem elektronischen ABS-Regler und dem den elektrisch ansteuerbaren Bremskraftverstärker ansteuernden Druck- bzw. Verzögerungsregler kein Austausch von den ABS-Regelzustand charakterisierenden Größen bis auf die Informationen über die Solldruckvorgabe und die Radgeschwindigkeiten stattfindet. Dadurch treten bei ABS-Regelvorgängen, die durch eine Fremdansteuerung des Bremskraftverstärkers eingeleitet werden, unkomfortable Bewegungen des Bremskraftverstärkers sowie Geräusche auf. Außerdem können auch schlechte ABS-Regelzyklen (Bremswegverluste) auftreten, die durch Druckschwankungen bei der ABS-Regelung verursacht werden, die der Druckregler, mit dem elektronisch regelbaren Bremskraftverstärker zusammenwirkend, versucht auszuregeln.

Aus der DE 40 28 290 C1 ist schließlich ein Verfahren zur Verkürzung des Bremsweges in kritischen Fahrsituationen, insbesondere bei sog. Panikbremsungen bekannt, bei dem die durch den Fahrzeugführer veranlaßte Betätigungsgeschwindigkeit des Bremspedals als Kriterium für das Auslösen eines automatischen Bremsvorgangs verwendet wird, bei dem ein maximal möglicher Bremsdruck aufgebaut wird.

Es ist daher Aufgabe der vorliegenden Erfindung, ein Verfahren vorzuschlagen, bei dessen Durchführung gewährleistet ist, daß bei ABS-Regelvorgängen, die durch eine Fremdansteuerung des Bremskraftverstärkers eingeleitet werden, unkomfortable Bewegungen des Bremskraftverstärkers sowie Geräusche vermieden werden. Außerdem sollen beim erfindungsgemäßen Verfahren Bremswegverluste, die durch Druckschwankungen bei der ABS-Regelung verursacht werden, eliminiert werden.

Diese Aufgabe wird erfindungsgemäß dadurch gelöst, daß bei einem Eintritt in die Antiblockier-Regelung der momentane Druck- bzw. Verzögerungs-Istwert gespeichert und der Bremskraftverstärker derart angesteuert wird, daß der Druck- bzw. Verzögerungs-Istwert konstant gehalten wird.

Vorteilhafte Weiterbildungen des Erfindungsverfahrens sind in den Unteransprüchen 2 bis 5 aufgeführt.

Weitere Einzelheiten, Merkmale und Vorteile der Erfindung gehen aus der nachfolgenden Beschreibung eines Ausführungsbeispiels unter Bezugnahme auf die beiliegende Zeichnung hervor. In der Zeichnung zeigt:
- Fig. 1: eine hydraulische Bremsanlage zur Durchführung des erfindungsgemäßen Verfahrens, stark vereinfacht,und
- Fig. 2a bis 2c: diagrammatische Darstellungen der Druckverläufe bei der Durchführung des erfindungsgemäßen Verfahrens in verscheidenen Regelsituationen.

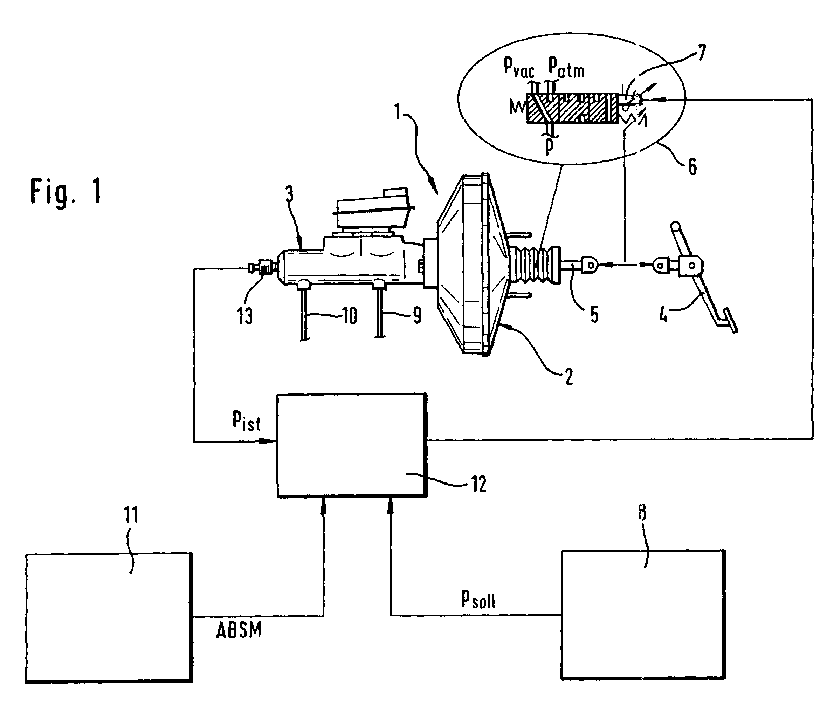

Die in Fig. 1 dargestellte Bremsanlage für Kraftfahrzeuge besteht im wesentlichen aus einer Betätigungseinheit 1, einem elektronischen Regler 8, einem Antiblockiersystem mit einem elektronischen ABS-Regler 11 sowie nicht gezeigten Radbremsen. Die Betätigungseinheit 1 besteht ihrerseits aus einem mittels eines Betätigungspedals 4 betätigbaren pneumatischen Bremskraftverstärker, vorzugweise einem Unterdruck-Bremskraftverstärker 2, dem ein Hauptbremszylinder 3, vorzugweise ein Tandemhauptzylinder 3, nachgeschaltet ist, dessen nicht gezeigte Druckräume über hydraulische Leitungen 9, 10 mit den Radbremsen in Verbindung stehen. An das Betätigungspedal 4 ist eine Betätigungsstange 5 angekoppelt, die der mechanischen Betätigung eines lediglich schematisch angedeuteten Steuerventils 6 dient, das den Auf- und Abbau eines pneumatischen Differenzdruckes im Gehäuse des Unterdruck-Bremskraftverstärkers 2 steuert. Ein Elektromagnet 7 ermöglicht dabei eine (Fremd-) Ansteuerung des Steuerventils 6 unabhängig von der Betätigungsstange 5. Der Elektromagnet 7 wird dabei durch Ansteuersignale eines elektronischen Bremsdruckreglers 12 angesteuert, dem als Eingangsgrößen ein vom ABS-Regler 11 erzeugtes Signal ABSM, ein vom Regler 8 erzeugtes Druck-Sollwertsignal P_{**soll**} sowie ein von einem den im System herrschenden hydraulischen Druck erfassenden Drucksensor 13 erzeugtes Druck-Istwertsignal P_{**ist**} zugeführt werden. Das Signal ABSM enthält dabei die Information über den ABS-Regelzustand, d.h., darüber, ob gerade ein ABS-Regelvorgang stattfindet oder ob die ABS-Regelung inaktiv ist.

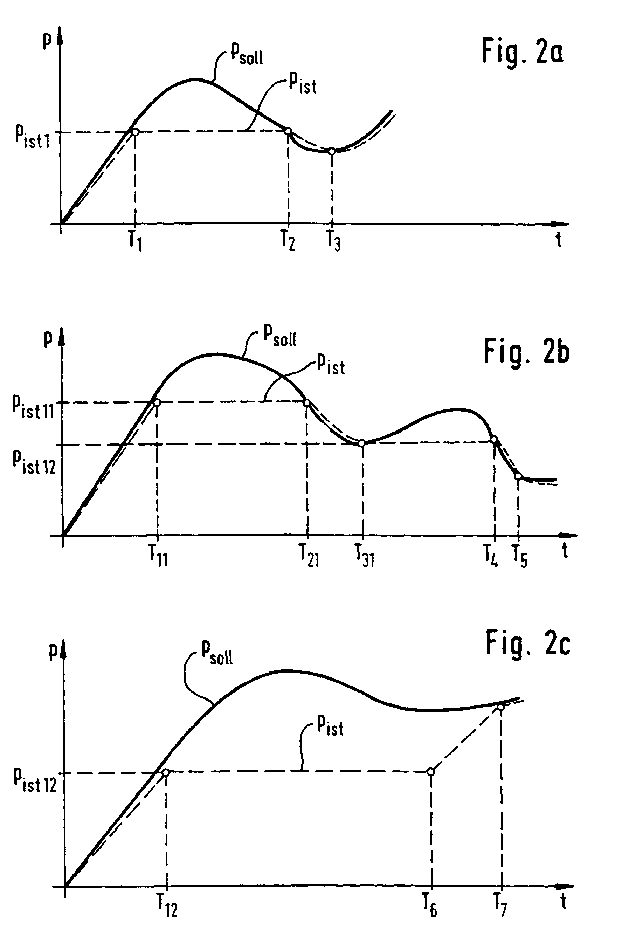

In Fig. 2a,b, und c sind diagrammatische Darstellungen der Signalverläufe P_{**soll**} und P_{**ist**} über der Zeit t in verschiedenen Regelsituationen dargestellt.

Fig. 2a zeigt eine Druckregelung bei gleichbleibendem Reibbei wert µ zwischen Fahrbahn und Rad. Es wird angenommen, daß im Zeitpunkt T_{**1**} der ABS-Regler 11 ein Signal ABSM erzeugt, d.h., daß im Zeitpunkt T_{**1**} ein ABS-Regelvorgang beginnt. Der diesem Zeitpunkt entsprechende momentane Druck-Istwert P_{**ist1**} wird abgespeichert, wonach der Ist-Druck P_{**ist**} vom Druckregler 12 bis zum Zeitpunkt T₂ konstant gehalten wird, in dem der Druck-Sollwert P_{**soll**} dem Druck-Istwert P_{**ist**} entspricht. Wird der Druck-Istwert P_{**ist**} vom Druck-Sollwert P_{**soll**} unterschritten, so wird der Druck-Istwert P_{**ist**} durch den Druckregler 12 gemäß dem vorgegebenen Sollwertverlauf bis zum Zeitpunkt T_{**3**} reduziert, in dem der ABS-Regelvorgang vom ABS-Regler 11 abgeschaltet wird. Ab dem Zeitpunkt T_{**3**} folgt der vom Druckregler 12 einge-steuerte Druck-Istwert P_{**ist**} der Druckvorgabe P_{**soll**}.

Bei der in Fig. 2b gezeigten Regelung bleibt die ABS-Regelung bis zum Zeitpunkt T_{**5**} aktiv. Zu Beginn der ABS-Regelung im Zeitpunkt T_{**11**} wird der diesem Zeitpunkt entsprechende Druck-Istwert P_{**ist11**} abgespeichert, wonach der Ist-Druck Pᵢₛₜ vom Druckregler 12 bis zum Zeitpunkt T_{**21**} konstant gehalten wird, in dem der Druck-Sollwert P_{**soll**} dem Druck-Istwert P_{**ist11**} entspricht.

Im Zeitabschnitt T_{**11**}bis T_{**21**} wird die Regelung bei einem hohen Reibbeiwert µ zwischen Fahrbahn und Rad durchgeführt. Im Zeit-punkt T_{**21**} erfolgt eine Änderung des Reibbeiwertes von "high-µ" auf "low-µ", so daß der vom Druckregler 12 eingesteuerte Ist-Druck P_{**ist**} der Druckvorgabe P_{**soll**} folgt, bis im Zeitpunkt T_{**31**} der diesem Zeitpunkt entsprechende Druck-Istwert P_{**ist12**} abgespeichert wird und den vorhin erwähnten ersten Druck-Istwert P_{**ist11**} ersetzt. So wird der vom Druckregler 12 eingesteuerte Ist-Druck P_{**ist**} bis zum Zeitpunkt T_{**4**} auf diesem Wert konstant gehalten, wonach er im Zeitabschnitt T_{**4**} bis T_{**5**} der Vorgabe P_{**soll**} folgt, bis im Zeitpunkt T_{**5**} die ABS-Regelung abgeschaltet wird.

Bei der in Fig. 2c dargestellten Regelung, die am Anfang bei einem niedrigen Reibbeiwert "low-µ" stattfindet, wird der zu Beginn der ABS-Regelung im Zeitpunkt T_{**12**} ermittelte Druck-Istwert P_{**ist12**} abgespeichert und der vom Druckregler 12 eingesteuerte Ist-Druck P_{**ist**} im Zeitabschnitt T_{**12**} bis T_{**6**} auf diesem Wert konstant gehalten. Im Zeitpunkt T_{**6**}, in dem ein "µ-Sprung" von "low-µ" auf "high-µ" stattfindet, wird die ABS-Regelung abgeschaltet und der Bremsregler 12 versucht, die Vorgabe P_{**soll**} im Zeitabschnitt T_{**6**} bis T_{**7**} einzuregeln. Die Druckerhöhung im Zeitabschnitt T_{**6**} bis T_{**7**} erfolgt dabei vorzugsweise mit einem vorgegebenen Druckgradienten, der nicht überschritten werden darf.

Aus der vorhergehenden Beschreibung erhellt, daß während der aktiven ABS-Regelung lediglich Druckhalte- und -abbauphasen erlaubt sind. Außerdem ist es sinnvoll, wenn die zu Beginn der ABS-Regelung ermittelten Druck-Istwerte leicht, z. B. in einem PT_{**1**}-Glied, gefiltert werden.

## Patentansprüche

1. Verfahren zum Betrieb einer hydraulischen Bremsanlage für Kraftfahrzeuge, die mit einem Antiblockiersystem, einem unabhängig vom Fahrerwillen elektrisch ansteuerbaren Bremskraftverstärker (2) und einem der Ansteuerung des Bremskraftverstärkers (2) dienenden Druck- bzw. Verzögerungsregler (12) ausgestattet ist, dem als Eingangsgrößen ein von einem übergeordneten Regler (8) erzeugtes Druck- bzw. Verzögerungs-Sollwertsignal, ein den im System herrschenden hydraulischen Druck bzw. die auftretende Verzögerung repräsentierendes Istwertsignal sowie ein den Antiblockier-Regelmodus anzeigendes Signal (ABSM) zugeführt werden, dadurch **gekennzeichnet,** daß bei einem Eintritt in die Antiblockier-Regelung der momentane Druck- bzw. Verzögerungs-Istwert (P_{**ist1**}, P_{**ist11**}, P_{**ist12**} ) gespeichert und der Bremskraftverstärker (2) derart angesteuert wird, daß der Druck- bzw. Verzögerungs-Istwert (P_{**ist**}) konstant gehalten wird.

2. Verfahren nach Anspruch 1 dadurch **gekennzeichnet,** daß bei einem Absenken des Druck- bzw. Verzögerungs-Sollwertes (P_{**soll**}) unter den gespeicherten Druck- bzw. Verzögerungs-Istwert (P_{**ist1**}, P_{**ist11**}, P_{**ist12**}) eine Ansteuerung des Bremskraftverstärkers (2) durch den Druck- bzw. Verzögerungsregler (12) im Sinne der Einstellung eines reduzierten Druck- bzw. Verzögerungs-Istwertes (P_{**ist12**}) stattfindet, der gespeichert und konstant gehalten wird.

3. Verfahren nach Anspruch 1 oder 2 dadurch **gekennzeichnet,** daß bei einem Austritt aus der Antiblockier-Regelung eine Ansteuerung des Bremskraftverstärkers (2) durch den Druck- bzw. Verzögerungsregler (12) im Sinne einer Anpassung des Druck- bzw. Verzögerungs-Istwertes (P_{**ist**}) an den vorgegebenen Druck- bzw. Verzögerungs-Sollwert (P_{**soll**}) erfolgt.

4. Verfahren nach Anspruch 3 dadurch **gekennzeichnet,** daß bis zum Erreichen des vorgegebenen Druck- bzw. Verzögerungs-Sollwertes (P_{**soll**}) ein bestimmter Druck- bzw. Verzögerungsgradient nicht überschritten wird.

5. Verfahren nach einem der vorhergehenden Ansprüche dadurch **gekennzeichnet,** daß der Druck- bzw. Verzögerungs-Istwert (P_{**ist**}) vor dem Abspeichern in einem PT1-Glied gefiltert wird.

## Claims

1. Method of operating a hydraulic brake system for automotive vehicles, which includes an anti-lock system, a brake force booster (2) which is electrically actuatable independently of the driver's wish, and a pressure or deceleration controller (12) which is used to actuate the brake force booster (2) and to which a pressure or deceleration nominal value signal generated by a superior controller (8), an actual value signal representative of the hydraulic pressure that prevails in the system or of the occurring deceleration, and a signal (ABSM) indicative of the anti-lock control mode are sent as input quantities,
**characterized** in that upon commencement of the anti-lock control, the instantaneous pressure or deceleration actual value (Pᵢₛₜ₁, Pᵢₛₜ₁₁, Pᵢₛₜ₁₂) is stored and the brake force booster (2) is actuated so that the pressure or deceleration actual value (Pᵢₛₜ) is maintained constant.

2. Method as claimed in claim 1,
**characterized** in that when the pressure or deceleration nominal value (Pₛₒₗₗ) is reduced below the stored pressure or deceleration actual value (Pᵢₛₜ₁, Pᵢₛₜ₁₁, Pᵢₛₜ₁₂), the brake force booster (2) is actuated by the pressure or deceleration controller (12) to the effect of adjusting a reduced pressure or deceleration actual value (Pᵢₛₜ₁₂) which is stored and maintained constant.

3. Method as claimed in claim 1 or claim 2,
**characterized** in that upon de-activation of the anti-lock control, the brake force booster (2) is actuated by the pressure or deceleration controller (12) to the effect of adapting the pressure or deceleration actual value (Pᵢₛₜ) to the predetermined pressure or deceleration nominal value (Pₛₒₗₗ).

4. Method as claimed in claim 3,
**characterized** in that a defined pressure or deceleration gradient is not exceeded until the predetermined pressure or deceleration nominal value (Pₛₒₗₗ) is reached.

5. Method as claimed in any one of the preceding claims,
**characterized** in that the pressure or deceleration actual value (Pᵢₛₜ) is filtered in a PT1 element before it is stored.

## Revendications

1. Procédé de gestion d'une installation de freinage hydraulique pour véhicules automobiles qui est équipée d'un système anti-blocage, d'un amplificateur de force de freinage (2) pouvant être piloté électriquement indépendamment de la volonté du conducteur, et d'un régulateur de pression ou de décélération (12) servant au pilotage de l'amplificateur de force de freinage (2), auquel sont transmis, comme grandeurs d'entrée, un signal de valeur de consigne de la pression ou de la décélération produit par un régulateur de plus haut niveau (8), un signal de valeur réelle représentant la pression hydraulique régnant dans le système ou la décélération produite, ainsi qu'un signal (ABSM) indiquant le mode de régulation anti-blocage, caractérisé en ce que lorsqu'on entre dans la régulation anti-blocage, la valeur réelle instantanée (Pᵢₛₜ₁, Pᵢₛₜ₁₁, Pᵢₛₜ₁₂) de la pression ou de la décélération est mémorisée et l'amplificateur de force de freinage (2) est piloté de telle manière que la valeur réelle (Pᵢₛₜ) de la pression ou de la décélération soit maintenue constante.

2. Procédé selon la revendication 1, caractérisé en ce qu'en présence d'une chute de la valeur de consigne (Pₛₒₗₗ) de la pression ou de la décélération au-dessous de la valeur réelle mémorisée de la pression ou de la décélération (Pᵢₛₜ₁, Pᵢₛₜ₁₁, Pᵢₛₜ₁₂), il se produit un pilotage de l'amplificateur de force de freinage (2) sous l'action du régulateur de pression ou de décélération (12) dans le sens tendant à établir une valeur réelle réduite (Pᵢₛₜ₁₂) de la pression ou de la décélération, qui est mémorisée et maintenue constante.

3. Procédé selon la revendication 1 ou 2, caractérisé en ce que, lorsqu'on sort de la régulation anti-blocage, il se produit un pilotage de l'amplificateur de force de freinage (2) par le régulateur de pression ou de décélération (12) dans le sens tendant à adapter la valeur réelle (Pᵢₛₜ) de la pression ou de la décélération à la valeur de consigne imposée (Pₛₒₗₗ) de la pression ou de la décélération.

4. Procédé selon la revendication 3, caractérisé en ce qu'un gradient déterminé de pression ou de décélération n'est pas dépassé avant qu'on n'ait atteint la valeur de consigne (Pₛₒₗₗ) imposée de la pression ou de la décélération.

5. Procédé selon une des revendications précédentes, caractérisé en ce que la valeur réelle (Pᵢₛₜ) de la pression ou de la décélération est filtrée dans un élément PT1 avant la mémorisation.
